# EUROPEAN PATENT SPECIFICATION

(11) **EP 3 736 503 B1**
(45) Date of publication and mention of the grant of the patent: **20.09.2023**
(21) Application number: 20474001.3
(22) Date of filing: 04.05.2020
(51) Int. Cl.: F24D 3/16, F24D 3/12, F24F 5/00, F28D 1/02, F28D 1/04, F28F 1/20

(54) **FLEXIBLE WATER-BASED WALL-SURFACE HEATING AND COOLING SYSTEM**
FLEXIBLES WASSERUMLAUF-HEIZ- UND KÜHLSYSTEM FÜR WANDFLÄCHEN
SYSTÈME FLEXIBLE DE CHAUFFAGE ET DE REFROIDISSEMENT PAR EAU DE SURFACES DE PAROIS

(30) Priority: 07.05.2019 SK 452019
(43) Date of publication of application: 11.11.2020
(73) Proprietor: Plavcan, Anton, 972 51 Handlova (SK)
(72) Inventor: Plavcan, Anton, 972 51 Handlova (SK)
(74) Representative: Majlingová, Zuzana

(56) References cited:
- WO-A1-2012/028194
- DE-U1- 29 609 858
- DE-U1-202005 020 962
- FR-A1- 2 035 094
- US-A1- 2008 164 005

## Description

### Field

The invention is related to a flexible water-based wall-surface heating and cooling system.

### Background

The present status in the field of surface heating and cooling is characterized by a number of ways to create radiant surfaces that are placed in the floor, walls and ceilings of rooms. Floor heating is the best-known way of surface heating.

Complex allocation of individual systems is described in the standard EN 1264 - Water based surface embedded heating and cooling systems. These systems in the standard are classified according to the location of the pipe in a structure that can be embedded inside the screed (e.g. concrete screed floor cover), or placed below the screed in heat conducting plates, or below the screed in systems with surface elements. Practical implementations of surface heating and cooling systems are, for example, capillary system embedded below the screed, or surfaces composed of pre-fabricated drywall plates or other material with pipes inside the screed.

In dry floor, wall and ceiling systems, heat conductive plates made of steel or aluminum sheets are often built into the design systems, increasing the heat emitting to the space.

The surface layer of radiant surfaces consists of various floor covering, plaster or plasterboard.

The heat transfer occurs from the pipe to the heat-distributing layer, which may be covered by another front surface-layer.

In accordance with the standard EN 264, which determines the thermal output of a surface system, radiant surface performance and system flexibility on weathering depend on structure of the system layers, the thickness of their layers, the thermal conductivity of individual layers and the pipe distance. The more conductive the heating system is and the fewer transition layers it contains, the more flexible and efficient it is. The requirement for optimal system composition is often in contradiction to the desired way of implementing the system into the structure itself.

The overall pattern of the structure often also contains layers preventing better heat transfer.

The place where the heating surface is installed (floor, wall, ceiling) determines the requirements for surface-temperature limit-values to achieve the user's thermal comfort.

The temperature limit value of radiant walls in accordance with EN 1264-3 must not exceed 40° C, which is more than the temperature requirements of the floor and ceiling radiant surfaces.

Placing pipes in plastered walls or plasterboard are the most common forms of implementation of current wall surface heating systems. However, the performance of their radiant surface is limited by the low conductivity of plaster and plasterboard. Optimum wall heating capacity is achievable with well-conductive front surface-layers, which is rarely used nowadays.

At present, instead of radiant surfaces, panel heaters and other types of heating elements, which have different design principles, are invalid for surface radiant heating and therefore do not have the advantage of radiant heat-transfer. Radiant surfaces, unlike heating elements, are suitable for low-temperature heating and high-temperature cooling systems, making them ideal for combined use for both heating and cooling in a single system.

The analysis of the parameters affecting the radiant-surface performance shows that the most efficient heat transfer from the pipe to the surrounding environment is to install the pipe directly into the well conducting elements, which would also be the final layer in direct contact with the warm heated environment. By creating a radiant surface that takes into account such requirements, the parameters of the surface heating system are improved. The area will have 15 higher performance for both heating and cooling compared to existing systems. Therefore, water systems connected to such area will work at lower water temperatures to create the same area size, thereby achieving higher efficiency of the connected heat sources and thus lower operating costs.

WO 2012/028194 A1 discloses an infrared heater comprising a panel having an emitting surface wherein the panel is mounted in a housing, in such a way that the panel is in a stressed condition.

### Summary

The flexible wall surface system consists of the bottom and two upper base profiles, which are anchored to the wall.

The bottom profile is mounted along the entire length of the new radiant surface, except for 25 the point of pipe transition to the radiant surface. The two upper base profiles are mounted only on the width of the guiding profiles sliding in the groove of the base profiles. The groove of the base profiles is important for easy implementation with sliding the profiles into the groove. The guiding profiles are positioned vertically on the sides of the new radiant surface. The system further comprises of horizontally placed heat-exchange profiles into which a pipe of heat-transfer 30 medium forming the meander is inserted. The heat-exchanger profiles are placed one above the other, profile on the profile, whereby all placed heat-exchanger profiles at the ends are pushed in the pre-placed guiding profiles. The shape and placement of the system of profiles allow for progressive assembly of the system on site. The basis of the invention is the unique shape of the profiles and their mutual positioning on the assembly, thereby creating a new radiating surface from several profiles. The shape of the heat-exchange profiles is designed so that the profile itself comprises a conductive part and a heat-exchange radiant part. A pipe is fitted into the guiding part of the profile from which heat is transferred between the tube and the profile itself. After the pipe has been fitted into the profile, the pipe is closed between two profiles by mounting another profile. The space, which is created by placing two profiles side by side, has a circular closed-shape in the profile conductive part, so that heat-transfer from the pipe to the profile takes place optimally over the entire surface of the pipe. The heat-radiating part of the profile is planar in contact with the surrounding environment. Through this part of the profile, heat is transferred by radiation between the profile and the surroundings of the profile. The space created by placing two profiles side by side has an aesthetic planar-shape in the heat-exchange part of the profile. The aim of the assembly is to make the radiant area on a construction site similar to the floor-heating area on a construction site. When the profiles, of which the radiating surface consists, are mounted, a planar radiating-surface is created on the wall parallel to the wall of the object. According to standard EN 15377-1 recommendation for thermally conductive equipment, the profiles are made of aluminum or better conductive material, if such is to be developed in the future. Mounted pipes are made of PEX-AL-PEX, which simultaneously forms an oxygen barrier. The pipe in the radiant surface forms a meander gradually winding to the highest profile of the wall from which it returns to the floor. The flexible wall system is one of the dry wall-heating installation systems. In this system, the thermal conductive profiles are the only and at the same time the final layer of the system. There is an air gap and a wall from the rear view of the profiles. The high thermal conductivity of aluminum ensures optimum thermal performance of the system. The slim design of the system with a small volume of water ensures a flexible response of the system to the demand for system performance change. It is recommended to treat the visual side of the radiating wall by coating or painting, which is suitably incorporated into the surrounding environment.

Improved radiant heat transfer of the flexible system allows lowering the mean water temperature of the heating system compared to the same built-in area of another radiant system, thereby increasing the efficiency of connected heat sources such as condensing boilers or heat pumps. If a flexible radiant system is combined with a heat pump that can produce cool, a single heating and cooling system is created.

The assembly method of the system allows dilatation of the radiating surface. The base profiles of the flexible wall system are fixed to the wall by screwing into the anchors. Other profiles are placed loosely.

The disadvantage of the system is its dependence on the price trends of the aluminum price on the markets.

### Brief description of the drawings

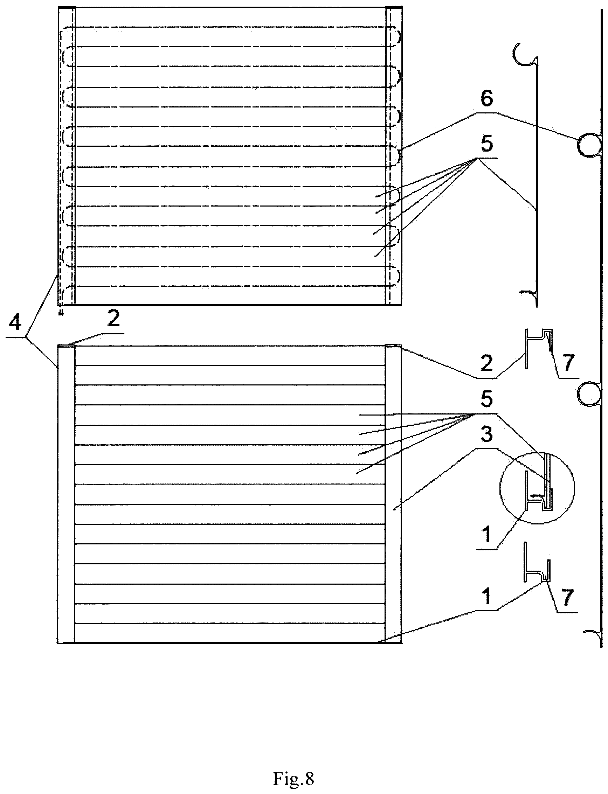

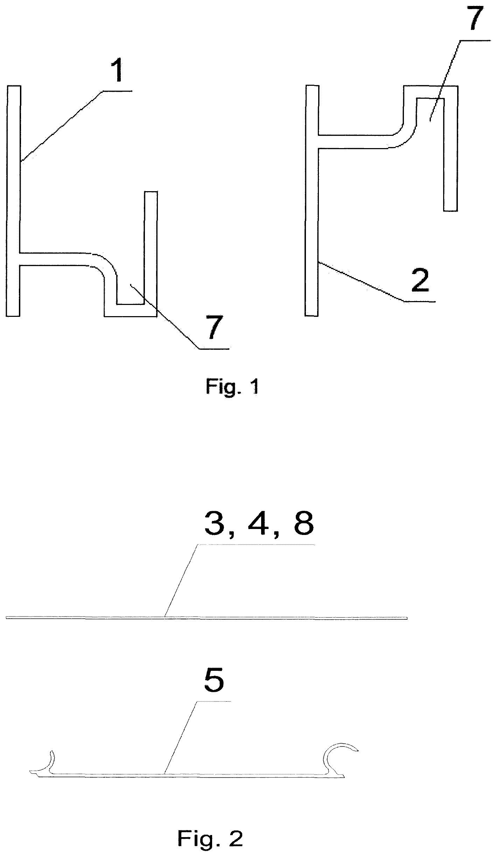

The base support profile of the flexible wall system is shown in Figure 1, wherein the profile is shown in cross-section at a position referred to as a lower base profile in the specification and at a position referred to as an upper base profile in the description. Figure No. 2 shows a guide profile and a heat exchange profile, where the profiles are shown in cross-section view. Figure No. 3 shows the connection of two heat exchange profiles, where after their connection there is a closed space for the tube.

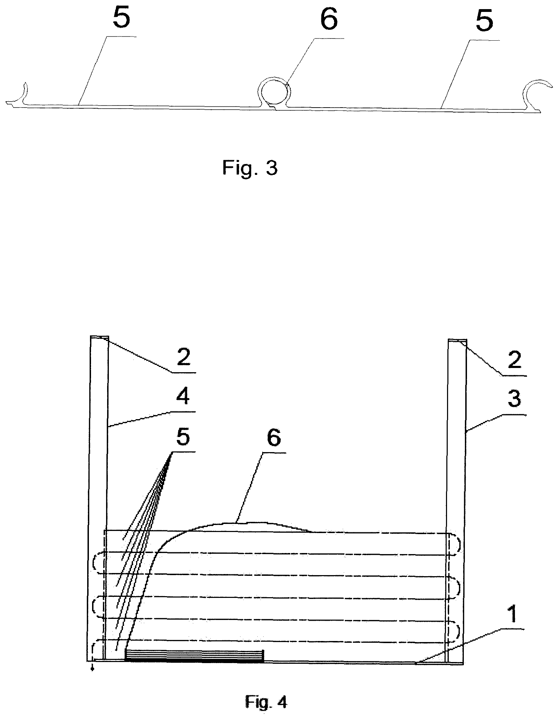

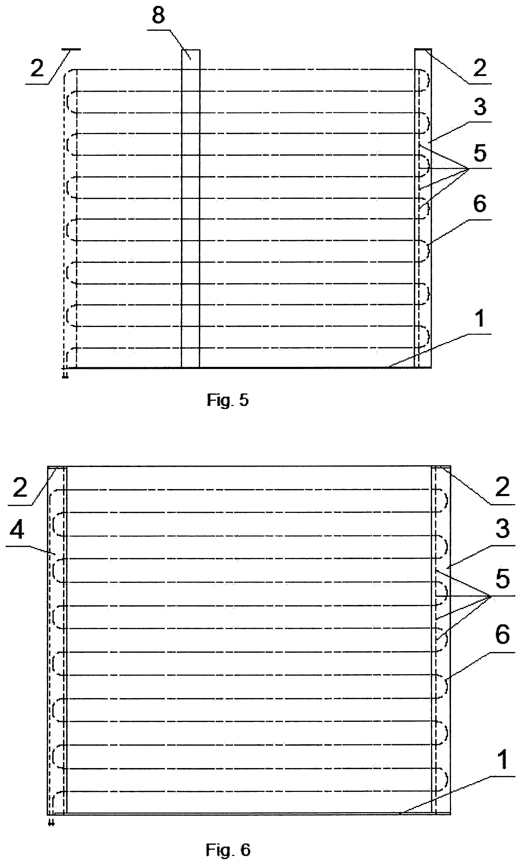

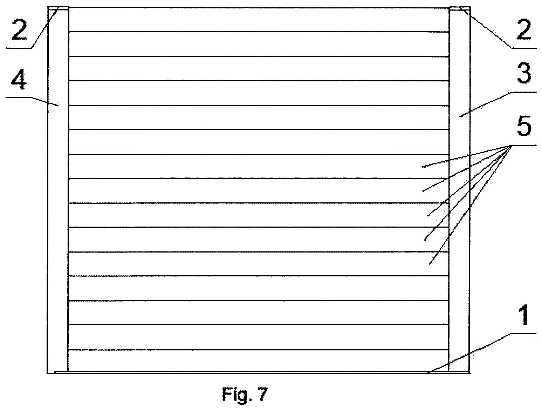

Figure No. 4 shows the mounting of the profiles on the wall so as to form a radiating surface while simultaneously installing the pipe. The heat exchange profiles are inserted between the guide profiles. According to the order of assembly, the heat exchange profiles are divided into the first, second, next-to-last and to last heat exchange profiles. According to the order of assembly, the guide profiles are divided into first and second guide profile. Figure No. 5 shows the position of the auxiliary guide profile which temporarily takes over the function of the second guide profile. Figure No. 6 shows the shape of the radiant surface from the mounted-pipe view. Figure No. 7 shows the form of a finished radiant surface from the perspective of the system owner.

### Examples

A simple hand tool such as an electric drill and a carbide grinder with an aluminum-cutting blade is used to mount the system. The supplied aluminum profiles are cut to length according to the radiant surface design. The bottom base profile **1** of the system is screwed into the anchors at the floor level on the wall.

The profile is laid along the entire length of the future area except where the pipes pass from the floor to the radiant area. On the sides from the upper side of the radiating surface, the upper base profiles **2** are fixed in a length equal to the widths of the guide profiles. The profiles **2** are fastened in the opposite position to the floor profile so that the profile grooves **7** face each other. Initially, the first guide profile **3,** farther from the pipe inlet to the radiating surface, is inserted into the grooves **7**. The profile is cut with a tolerance allowing its future dilatation as well as its movement in the grooves **7**. The heating system pipe **6** is unwound from a distributor identical to the distributor for underfloor heating towards the radiating surface. After it has been installed to the wall, the first heat exchange profile **5** is mounted on the lower base profile **1**. The tube **6** is pressed into the arc-shaped part of the first heat exchange profile of the same size as the tube itself. A second guide profile **4** is inserted into the grooves **7** of the base profiles at the point where the tube passes into the radiating surface. After the tube **6** has been inserted into the first heat exchange profile, a second heat exchange profile **5** is installed on the wall, which in its shape complements the first heat exchange profile. By mounting this profile, the tube **6** is completely enclosed in the formed circular space between the profiles. The tube **6** is rotated 180 ° at the end of the first profile and pressed into the molded part of the subsequently placed second heat exchange profile.

By installing more profiles and placing the tube in the profiles, a new radiant surface is created. After the next-to-last heat exchange profile has been fitted, an auxiliary guide profile **8** is fitted into the groove of the lower base profile, which is anchored to the wall from the top. The auxiliary guide profile **8** temporarily takes over the function of the second guide profile **4**, which is slid out from the grooves of the base profiles. The tube **6** is led from the radiant surface to the heating distributor through the empty space created in the previous step. After placing the pipe and connecting it to the distributor, the second guide profile **4** is inserted in its place and the auxiliary guide profile **8** is removed. The last heat exchange profile **5** is fitted in the radiant surface. This creates the final form of the system. The system shall be put into operation after performing the tests.

Variability of the solution depends on the size of a radiant surface, depending on the layout of the space and the available space for the installation of the heating and cooling surface.

### Industrial application

The technical solution is usable in the construction industry during the construction of new buildings as well as for the reconstruction of buildings after their insulation and replacement of the heating system. It is suitable for building heating and cooling systems. It is particularly suitable when it is possible to combine a heating and cooling system into one device. With existing heating systems, it is also possible to realize separate areas only for the cooling of areas, where the source of cooling will be well water.

The potential of the system is in heating systems cooperating with photovoltaic sources, because it allows the use of photovoltaic energy in combination with a heat pump to cool premises during its peak production.

Easy realizability enables the installation of the system to a wide range of technicians in the field of heating, alternatively to make minor modifications by self-help.

## Claims

1. Flexible water-based wall-surface heating and cooling system, **comprising** a heat-transfer medium pipe (6), a lower base-profile (1), an upper base-profile (2), a first guide-profile (3), a second guide-profile (4) and a first to last horizontally placed heat-exchange profiles (5), in which the heat-transfer medium pipe (6) is inserted, **characterized in that** the space between the heat exchange profiles (5) in which the heat-transfer medium pipe (6) is located has a circular closed shape.

2. Flexible water-based wall-surface heating and cooling system according to claim 1, **characterized in that** the lower base-profile (1) and the upper base-profile (2) have a groove (7) for inserting and sliding out the first guide-profile (3) and the second guide-profile (4).

3. Flexible water-based wall-surface heating and cooling system according to claim 1, **characterized in that** the horizontally arranged first to last heat-exchange profiles (5) are laid on the lower base-profile (1), superimposed in a row above: profile on the profile inserted behind the vertically arranged first guide-profile (3) and the second guide-profile (4), whereas the radiating surface formed by the first to last heat-exchange profiles (5) create planar shape.

## Patentansprüche

1. Flexibles wasserbasiertes Wandflächenheiz- und Kühlsystem, **bestehend** aus einem Wärmeträgermediumsrohr (6), einem unteren Basisprofil (1), einem oberen Basisprofil (2), einem ersten Führungsprofil (3), einem zweiten Führungsprofil (4) und einem ersten bis letzten horizontal angeordneten Wärmeaustauschprofil (5), in das das Wärmeträgermediumsrohr (6) eingelegt ist, **dadurch gekennzeichnet, dass** der Raum zwischen den Wärmeaustauschprofilen (5), in dem sich das Wärmeträgermediumsrohr (6) befindet, eine kreisförmige geschlossene Form aufweist.

2. Flexibles wasserbasiertes Wandflächenheiz- und Kühlsystem nach Anspruch 1, **dadurch gekennzeichnet, dass** das untere Basisprofil (1) und das obere Basisprofil (2) eine Nut (7) zum Ein- und Ausschieben des ersten Führungsprofils (3) und des zweiten Führungsprofils (4) aufweisen.

3. Flexibles wasserbasiertes Wandflächenheiz- und Kühlsystem nach Anspruch 1, **dadurch gekennzeichnet, dass** das erste bis letzte horizontal angeordnete Wärmeaustauschprofil (5) in einer Reihe übereinander auf dem unteren Basisprofil (1) verlegt ist: Profil auf dem Profil, das hinter dem vertikal angeordneten ersten Führungsprofil (3) und dem zweiten Führungsprofil (4) eingesetzt ist, wobei die durch das erste bis letzte Wärmeaustauschprofil (5) gebildete Strahlungsfläche eine ebene Form erzeugt.

## Revendications

1. Système flexible de chauffage et de refroidissement des surfaces murales à base d'eau, **comprenant** un tuyau (6) du fluide caloporteur, un profil (1) de base inférieur, un profil (2) de base supérieur, un premier profil-guide (3), un deuxième profil-guide (4) et les profils (5) d'échange de chaleur horizontalement placés du premier au dernier, où le tuyau (6) du fluide caloporteur est inséré, **caractérisé en ce que** l'espace entre les profils (5) d'échange de chaleur, où le tuyau (6) du fluide caloporteur est placé, a une forme ronde fermée.

2. Système flexible de chauffage et de refroidissement des surfaces murales à base d'eau selon la revendication 1, **caractérisé en ce que** le profil (1) de base inférieur et le profil (2) de base supérieur sont pourvus d'une rainure (7) pour insérer et faire glisser le premier profil-guide (3) et le deuxième profil-guide (4).

3. Système flexible de chauffage et de refroidissement des surfaces murales à base d'eau, selon la revendication 1, **caractérisé en ce que** les profils (5) d'échange de chaleur horizontalement placés du premier au dernier sont posés sur le profil (1) de base inférieur, superposés dans une rangée au-dessus: profil sur le profil inséré derrière le premier profil-guide (3) verticalement arrangé et le deuxième profil-guide (4), où la surface rayonnante formée par les profils (5) d'échange de chaleur horizontalement placés du premier au dernier créent une forme plane.
